# EUROPEAN PATENT SPECIFICATION

(11) **EP 3 608 051 B1**
(45) Date of publication and mention of the grant of the patent: **17.03.2021**
(21) Application number: 19189098.7
(22) Date of filing: 30.07.2019
(51) Int. Cl.: B23Q 7/03

(54) **MACHINE TOOL WITH AN IMPROVED SYSTEM FOR MOVING PANELS OR THE LIKE**
WERKZEUGMASCHINE MIT EINEM VERBESSERTEN SYSTEM ZUM BEWEGEN VON PLATTEN ODER DERGLEICHEN
MACHINE-OUTIL AVEC SYSTEME AMELIORE POUR DÉPLACER DES PANNEAUX OU SIMILAIRE

(30) Priority: 07.08.2018 IT 201800007912
(43) Date of publication of application: 12.02.2020
(73) Proprietor: SCM Group S.p.A., 47921 Rimini (RN) (IT)
(72) Inventor: PERAZZOLI, Umberto, 47921 RIMINI (IT)
(74) Representative: Tiburzi, Andrea

(56) References cited:
- EP-A1- 0 226 237
- DE-A1- 3 505 372
- DE-A1- 19 811 242
- DE-U1-202004 004 493

## Description

This invention relates to a machine tool with an improved system for moving panels or the like.

More in detail, the invention relates to a machine tool equipped with an adjustable system for moving panels to be machined made of fibre cement, or wood, or plastic materials, or the like.

The description below relates to the machining of panels made of fibre cement, but it is quite apparent how the same should not be considered limited to this specific use, as the machine according to the invention may also be advantageously applied in the machining of panels made of different materials.

There are prior art machine tools equipped with systems for the linear movement of panels to be machined.

These machines normally comprise two lateral kinematic systems arranged at the same height, separated from each other, and each consisting of a chain and a roller positioned at a given distance above each other.

At the above-mentioned kinematic systems there are work tools, so that when the panel to be machined is positioned in the spaces between the chains and the rollers of the kinematic systems and fed from the latter along a predetermined direction, the side edges of the panel are machined by the tools during the feeding.

In order to compensate for the irregularities normally present in the thickness of the panels to be machined, the kinematic systems are generally provided with elastic elements to induce the coming together of the chain and the respective roller.

However, this type of machine tool has various drawbacks and technical limitations linked, mainly, with progressive reduction in the degree of precision of the machining on the panels with the continuous use of the machine.

An example of a known technical solution is disclosed in DE 202004004493 U1, which relates to a machine tool for machining panels.

In light of the above, the aim of the invention is therefore to provide a machine tool with an improved system for moving panels or the like which enables a high level of machining precision to be constantly achieved.

Another aim of the invention is to provide a machine tool with an improved system for moving panels or the like wherein the system is easily adjustable to allow a correct movement and machining of the panels.

A further aim of the invention is to provide a machine tool with an improved system, which is adjustable, for moving panels or the like which is also equipped with control means for checking the correct calibration status of the system.

The specific object of the invention is therefore a machine tool for machining panels or similar workpieces, comprising: a moving system for moving a panel along a predetermined feed direction, said moving system comprising: chain means comprising a plurality of links, wherein at least one link of said plurality of links comprises a support element, a movable element which is coupled, in a movable way, to said support element and elastic means provided between said support element and said movable element; contact means positioned facing said chain means in such a way that when said panel is positioned, in use, between said chain means and said contact means, said elastic means push said panel against said contact means; operating means for machining said panel during the feeding of said panel according to said predetermined feed direction; wherein said at least one link also comprises adjusting means for adjusting the preloading of said elastic means and allowing the variation of the thrust exerted by said elastic means on said panel towards said contact means.

Preferably according to the invention, said adjusting means comprise threaded member acting on said elastic means.

Further, according to the invention, said threaded member can be coupled with said movable element.

Again according to the invention, said adjusting means can be manoeuvred manually.

Conveniently, according to the invention, said support element or said movable element can comprise abutting means for limiting the relative movement between said support element or said movable element, induced by said elastic means.

Advantageously according to the invention, said a machine tool can comprise at least one measuring device for measuring the preload of said elastic means.

Further, according to the invention, said at least one measuring device can comprise actuating means configured for exerting, in use, a compression force of a predetermined intensity on said elastic means.

Again, according to the invention, said at least one measuring device can comprise a detection device for detecting, in use, at least one movement of said actuating means when said actuating means exert said compression force on said elastic means.

Advantageously, according to the invention, said at least one measuring device can comprise a control unit operatively connected to said actuating means and to said detection device and configured in such a way as to determine, in use, whether the preload of said elastic means detected is higher or lower or substantially equal to a predetermined preload value, based on the movement detected by said detection means.

Preferably, according to the invention, said chain means are positioned beneath said contact means.

The invention is now described, by way of example and without limiting the scope of the invention, with reference to the accompanying drawings which illustrate preferred embodiments of it, in which:
Figure 1 shows a machine tool with an improved system for moving panels or the like according to a first embodiment of the invention;
Figure 2 is a longitudinal cross section view showing two consecutive links of a chain of the moving system;
Figure 3 is a partial transversal cross section view showing a part of the above-mentioned moving system;
Figure 4 shows a machine tool with an improved system for moving panels or the like according to a second embodiment of the invention;
Figure 5 is a detailed view of the machine shown in Figure 4;
Figure 6 is a further detailed view of the machine shown in Figure 4 during a step of calibrating the system for moving panels;
Figure 7 is a detailed side view of the machine shown in Figure 4; and
Figure 8 is a view through the line A-A indicated in Figure 7.

The similar parts will be indicated in the various drawings with the same numerical references.

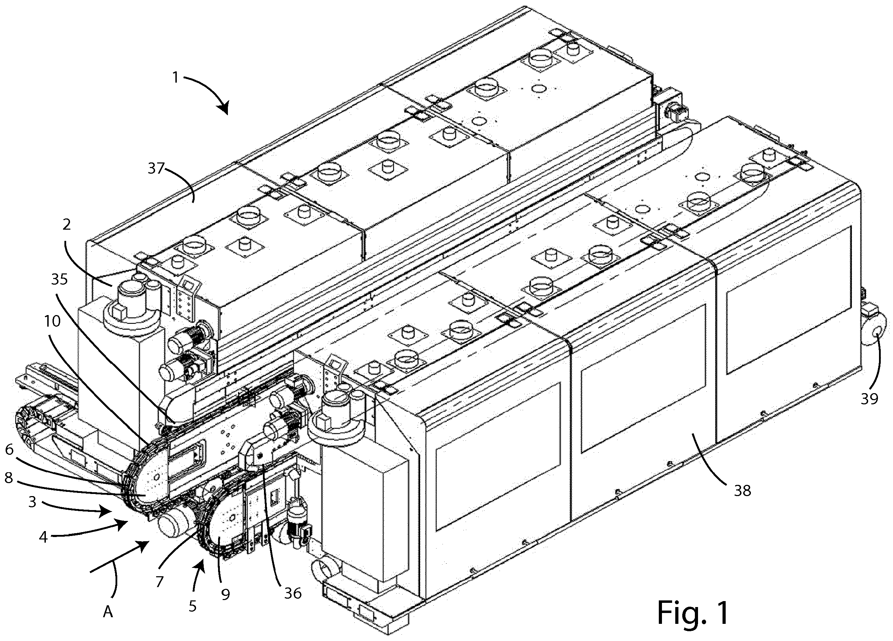

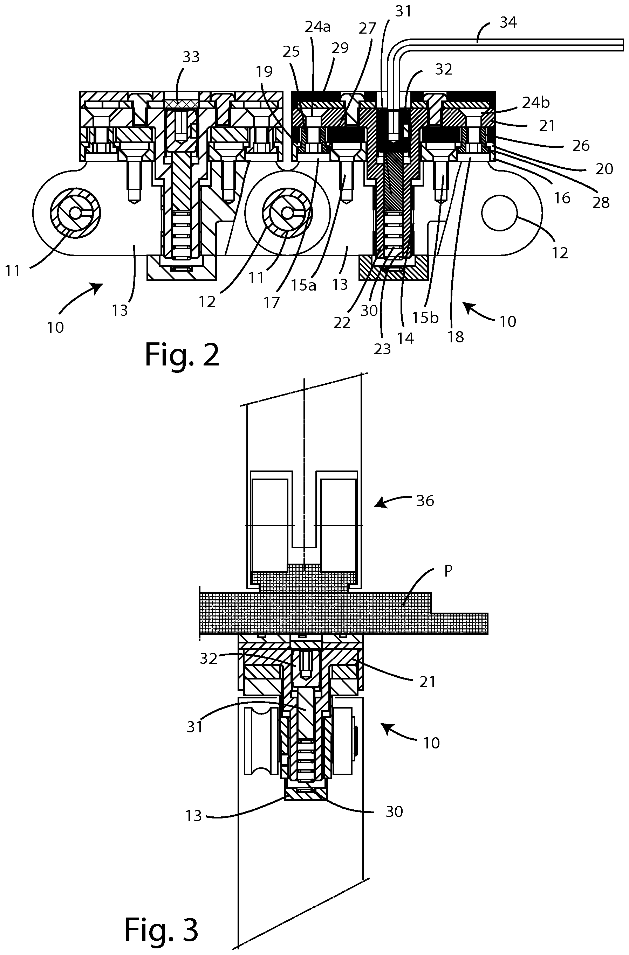

With reference to Figures 1 to 3, the numeral 1 denotes a machine tool for machining panels made of fibre cement or other material.

The machine tool 1 comprises a frame 2 on which is provided a moving system 3 for conveying the panels P to be machined along a predetermined feed direction A.

In particular, the moving system 3 comprises a first chain support 4 and a second chain support 5 each equipped with a chain 6, 7 wound on a respective longitudinal support 8, 9 arranged parallel to the above-mentioned feed direction A.

The machine tool 1 also comprises a motor 39 to allow the movement of the chains 6, 7 around the respective longitudinal support 8, 9.

Each chain 6, 7 consists of a plurality of links 10 comprising connection portions 11, 12, opposite each other, configured in such a way as to allow the articulation.

Each link 10 of the chains 6, 7 comprises a support 13, in which is formed a central vertical hole 14.

On this support 13 is rigidly connected, by means of screws 15a, 15b, a first plate 16 in which are made two side cavities 17, 18 defined above by a respective annular shoulder 19, 20.

Each link 10 also comprises a movable element 21 equipped with a central protruding portion 22 dimensioned in such a way as to be able to insert, with clearance, in the central vertical hole 14 of the support 13 and equipped, itself, with a vertical through hole 23 threaded in the respective top part.

Beneath the movable element 21 are rigidly connected, by means of screws 24a, 24b, two protruding elements 25, 26 equipped with respective wide ends 27, 28 positioned, respectively, in the side cavities 17, 18 of the above-mentioned first plate 16.

A rubber plate 29 is also fixed on the movable element 21 to favour the adherence of the panel P.

Each link 10 also comprises a spring 30 positioned in the vertical through hole 23 of the movable element 21 and resting, below, on the bottom of the central vertical hole 14 of the support 13.

In the vertical through hole 23 of the movable element 21, above said spring 30, there is a movable cylinder 31 which is in contact above with an adjustment grub screw 32 screwed in the thread formed in the top part of the vertical through hole 23 of the movable element 21, in such a way that the spring 30 pushes the movable element 21 away from the support element 13 up to the maximum limit determined by the contact between the wide ends 27, 28 of the above-mentioned protruding elements 25, 26 and the annular shoulders 19, 20 of the above-mentioned side cavities 17, 18.

The adjustment grub screw 32 can be covered at the top with a removable cap 33, and operated from above, for screwing and unscrewing, by means of a common Allen key 34.

Above the first chain support 4 and the second chain support 5, at a predetermined from these, there are, respectively, provided a first roller 35 and a second roller 36 which are also oriented parallel to the above-mentioned feed direction A, where the term "roller" means an apparatus equipped with a plurality of idle rollers aligned with each other in such a way that their axes of rotation are parallel.

According to a possible variant of the invention, the above-mentioned rollers can be replaced, respectively, with two motor-driven belts.

At the sides of the machine tool 1, opposite the moving system 3, there is a first operating unit 37 and a second operating unit 38, such as to also extend parallel to the feed direction A.

The first operating unit 37 and the second operating unit 38 each comprise, inside them, respective tools or operating members (not illustrated) arranged and configured in such a way as to be able to perform one or more machining operations on the sides of a panel P positioned in the empty spaces present between the first chain support 4 and the first roller 35 and between the second chain support 5 and the second roller 36 and moved by these along the feed direction A.

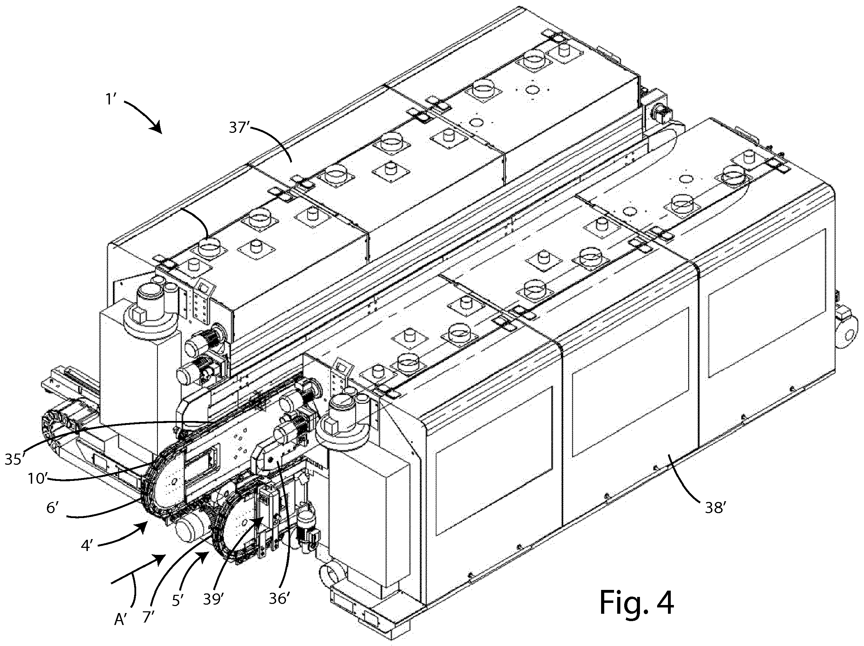

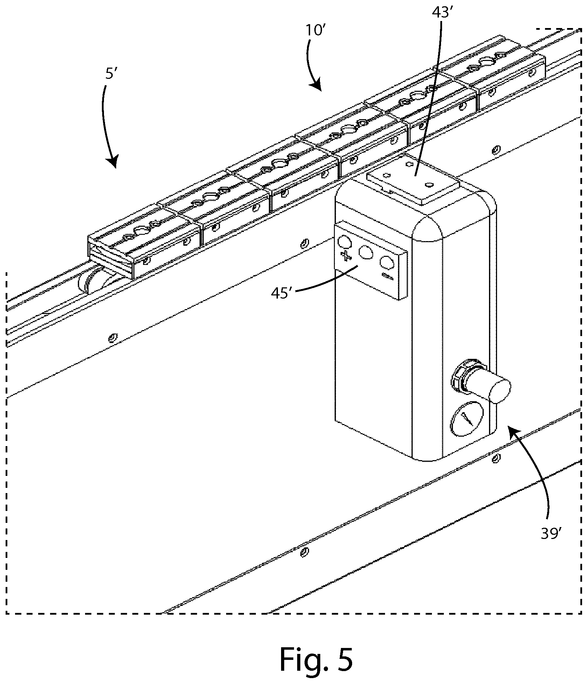

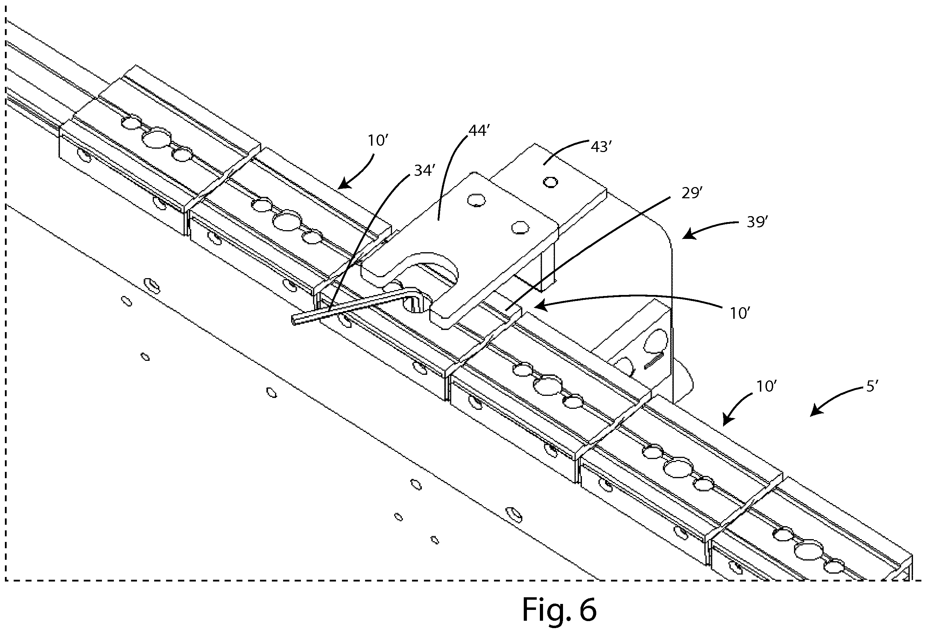

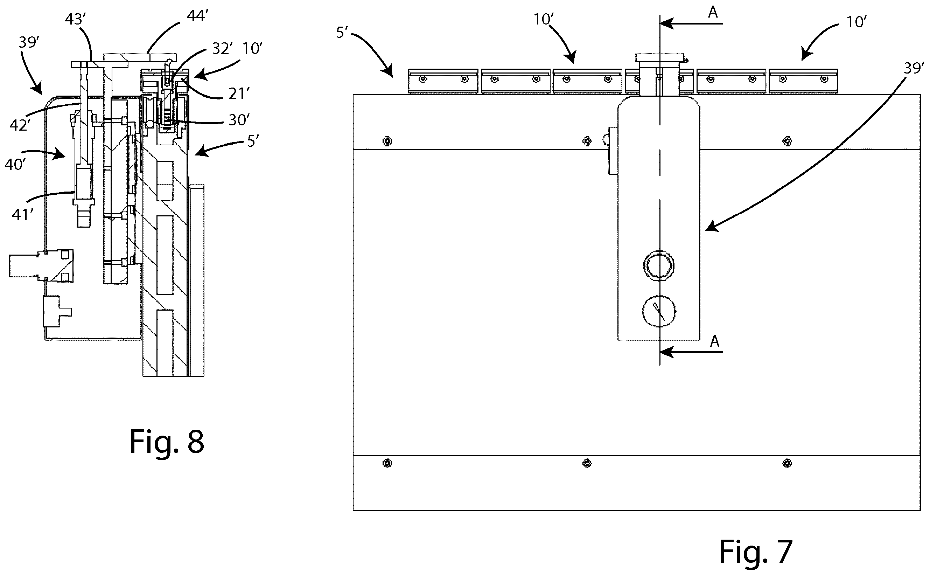

With reference to Figures 4-8, the numeral 1' denotes a second machine tool identical to the above-mentioned machine tool 1, with the exception of the further presence of one or more control devices 39', positioned at the first chain support 4' and/or the second chain support 5', to allow the control, that is to say, the measurement, of the preload of the spring 30' of the links 10'.

In particular, each control device 39' comprises a piston-cylinder system 40' consisting of a cylinder 41' connected to a pneumatic system (not illustrated) and a piston 42' movable vertically with respect to the cylinder 41'.

At the top of the piston 42' is rigidly connected a support element 43' to which can be fixed, in a removable fashion, a fork-like element 44' configured in such a way as to position above the links 10' of the respective chain 6', 7' when mounted on said support element 43'.

Each control device 39' also includes a linear encoder (not illustrated), that is to say, a position transducer for detecting the position of the support element 43' when the above-mentioned pneumatic system pushes the piston 42' downwards.

The linear encoder and the pneumatic system are both connected to a control system for the relative control.

The control device 39' also comprises a display 45' connected to the control system, to indicate to the operator, visually, how to proceed for the adjustment of the preload of the spring 10' controlled by means of the control device 39'.

During the operation of the two machine tools 1, 1' described above, the panels P positioned between the chain supports 4, 5, 4', 5' and the rollers 35, 36, 35', 36' are conveyed along the feed direction A, A' and machined, at their sides, by the operating elements provided in the respective operating units 37, 38, 37', 38', during the feeding.

Moreover, during the above-mentioned feed, the panels P are pushed constantly upwards against the above-mentioned rollers 35, 36, 35', 36' by the preloaded springs 30, 30', provided in the links 10, 10' on which the panels P are supported.

The preload of the springs 30, 30' can also be adjusted in advance by removing the cap 33 from any link 10, 10' and screwing or screwing, as required, the adjustment grub screw 32, 32' by means of an Allen key 34, 34'.

In the second machine tool 1' it is also possible to carry out the check, that is to say, the measurement of the preload of the spring 30' of any link 10' by means of the control device 39' described above.

More specifically, in order to carry out this control it is necessary, firstly, to move the link 10' alongside the control device 39' and mount the fork-like element 44' on the relative support element 43' so that the rubber plate 29' of the link 10' comes into contact with the lower face of the fork-like element 44'.

After having carried out these preliminary operations, the above-mentioned pneumatic system is activated so as to impart to the piston 42', and consequently also to the fork-like element 44' and to the underlying movable element 21', a force of predetermined intensity, directed downwards.

Simultaneously, the above-mentioned encoder linear detects the new position adopted by the support element 43' as a result of the application of the force.

On the basis of the final position, the above-mentioned control system determines whether the preload of the spring being checked is adequate or not, that is to say, whether it is too high or too low.

In particular, if the preload detected is correct or higher or lower than the reference value, the above-mentioned control system will command the switching on, on the display 45', of a respective warning light corresponding to each of the three cases indicated above.

In this way, the operator knows whether, and if necessary how, an intervention must be made on the adjustment grub screw 32' by means of a socket-head screw 34' for adjusting the preload of the spring 10'.

As can be seen from the above description, the machine according to the invention is configured in such a way as to allow a simple and fast adjustment of the moving system and to maintain it in a correct operating status and, therefore, allow the performance of precise machining operations on the panels and, consequently, a reduction in the number of workpieces to be rejected.

This invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. Machine tool (1, 1') for machining panels or similar workpieces, comprising:
- a moving system (3) for moving a panel (P) along a predetermined advancing direction (A, A'), said moving system (3) comprising:
• chain means (6, 7; 6', 7') comprising a plurality of links (10, 10'), where at least one link of said plurality of links (10, 10') comprises a support element (13);
• corresponding means (35, 36; 35', 36') which are placed in front of said chain means (6, 7; 6', 7');
- operative means for machining said panel (P) while said panel (P) is advancing according to said predetermined advancing direction (A, A');
**characterized in that** the chain means (6, 7; 6', 7') comprises a movable element (21, 21') which is coupled in a movable way with said support element (13) and elastic means (30, 30') which are provided between said support element (13) and said movable element (21, 21'); said elastic means (30, 30') is configured to push said panel (P) against said corresponding means (35, 36; 35', 36') when said panel (P) is placed, in use, between said chain means (6, 7; 6', 7') and said corresponding means (35, 36; 35', 36'); and said at least one link comprises also adjusting means (32, 32') to adjust preload of said elastic means (30, 30') and allow changing the thrust exerted by said elastic means (30, 30') on said panel (P) towards said corresponding means (35, 36; 35', 36').

2. Machine tool (1, 1') according to claim 1, **characterized in that** said adjusting means comprise a threaded member (32, 32') acting on said elastic means (30, 30').

3. Machine tool (1, 1') according to claim 2, **characterized in that** said threaded member (32, 32') is coupled with said movable element (21, 21').

4. Machine tool (1, 1') according to any one of preceding claims, **characterized in that** said adjusting means (32, 32') are manually manoeuvrable.

5. Machine tool (1, 1') according to any one of preceding claims, **characterized in that** said support element (13) or said movable element (21, 21') comprises abutting means (20, 28) to limit relative movement between said support element (13) or said movable element (21, 21'), which is provoked by said elastic means (30, 30').

6. Machine tool (1') according to any one of preceding claims, **characterized in that** it comprises at least one measuring device (39') for measuring preload of said elastic means (30').

7. Machine tool (1') according to claim 6, **characterized in that** said at least one measuring device (39') comprises actuating means (40') which are configured to exert, in use, a compression force of a predetermined intensity on said elastic means (30').

8. Machine tool (1') according to claim 7, **characterized in that** said at least one measuring device (39') comprises a detecting device for detecting, in use, at least one movement of said actuating means (40') when said actuating means (40') exert said compression force on said elastic means (30').

9. Machine tool (1') according to claims 7 and 8, **characterized in that** said at least one measuring device (39') comprises a control unit which is operatively connected with said actuating means (40') and said detecting device and configured such as to determine, in use, whether detected preload of said elastic means (30') is greater or lower than or substantially equal to a predetermined preload value based on movement detected by said detecting device.

10. Machine tool (1, 1') according to any one of preceding claims, **characterized in that** said chain means (6, 7; 6', 7') are placed beneath said corresponding means (35, 36; 35', 36').

## Patentansprüche

1. Werkzeugmaschine (1, 1') zur Bearbeitung von Platten oder ähnlichen Werkstücken, umfassend:
- ein Bewegungssystem (3) zum Bewegen einer Platte (P) entlang einer vorgegebenen Vorschubrichtung (A, A'), wobei das Bewegungssystem (3) umfasst:
• Ketteneinrichtungen (6, 7; 6', 7'), die eine Vielzahl von Gliedern (10, 10') umfassen, wobei zumindest ein Glied der Vielzahl von Gliedern (10, 10') ein Trägerelement (13) umfasst;
• entsprechende Gegenhaltemittel (35, 36; 35', 36'), die gegenüber den Ketteneinrichtungen (6, 7; 6', 7') angeordnet sind;
- Arbeitsmittel für die Bearbeitung der Platte (P) während die Platte (P) entlang der vorgegebenen Vorschubrichtung (A, A') vorgeschoben wird;
**dadurch gekennzeichnet, dass** die Ketteneinrichtungen (6, 7; 6', 7') ein bewegliches Element (21, 21') umfassen, das beweglich mit dem Trägerelement (13) gekoppelt ist, und Federmittel (30, 30'), die zwischen dem Trägerelement (13) und dem beweglichen Element (21, 21') vorgesehen sind; wobei die Federmittel (30, 30') dafür ausgelegt sind, die Platte (P) gegen die Gegenhaltemittel (35, 36; 35', 36') zu drücken, wenn die Platte (P), im Gebrauch, zwischen den Ketteneinrichtungen (6, 7; 6', 7') und den Gegenhaltemitteln (35, 36; 35', 36') angeordnet ist; und wobei das zumindest eine Glied auch Einstellmittel (32, 32') umfasst, um die Vorspannung der Federmittel (30, 30') zu justieren und die Änderung des von den Federmitteln (30, 30') auf die Platte (P) ausgeübten Drucks in Richtung der Gegenhaltemittel (35, 36; 35', 36') zu ermöglichen.

2. Werkzeugmaschine (1, 1') nach Anspruch 1, **dadurch gekennzeichnet, dass** die Einstellmittel ein Gewindeorgan (32, 32') umfassen, das auf die Federmittel (30, 30') wirkt.

3. Werkzeugmaschine (1, 1') nach Anspruch 2, **dadurch gekennzeichnet, dass** das Gewindeorgan (32, 32') mit dem beweglichen Element (21, 21') gekoppelt ist.

4. Werkzeugmaschine (1, 1') nach einem der vorhergehenden Ansprüche, **dadurch gekennzeichnet, dass** die Einstellmittel (32, 32') von Hand betätigt werden können.

5. Werkzeugmaschine (1, 1') nach einem der vorhergehenden Ansprüche, **dadurch gekennzeichnet, dass** das Trägerelement (13) oder das bewegliche Element (21, 21') Anschlagmittel (20, 28) umfassen, um die durch die Federmittel (30, 30') verursachte relative Bewegung zwischen dem Trägerelement (13) oder dem beweglichen Element (21, 21') zu begrenzen.

6. Werkzeugmaschine (1') nach einem der vorhergehenden Ansprüche, **dadurch gekennzeichnet, dass** sie zumindest eine Messvorrichtung (39') zur Messung der Vorspannung der Federmittel (30') umfasst.

7. Werkzeugmaschine (1') nach Anspruch 6, **dadurch gekennzeichnet, dass** die zumindest eine Messvorrichtung (39') Antriebsmittel (40') umfasst, die dafür ausgelegt sind, im Gebrauch eine Kompressionskraft vorgegebener Stärke auf die Federmittel (30') auszuüben.

8. Werkzeugmaschine (1') nach Anspruch 7, **dadurch gekennzeichnet, dass** die zumindest eine Messvorrichtung (39') eine Erkennungseinrichtung umfassen, um im Gebrauch zumindest eine Bewegung der Antriebsmittel (40') zu erfassen, wenn diese Antriebsmittel (40') die Kompressionskraft auf die Federmittel (30') ausüben.

9. Werkzeugmaschine (1') nach den Ansprüchen 7 und 8, **dadurch gekennzeichnet, dass** die zumindest eine Messvorrichtung (39') eine Steuereinheit umfasst, die mit den Antriebsmitteln (40') und der Erkennungseinrichtung wirkverbunden ist und dafür konfiguriert ist, im Gebrauch, auf Grundlage der von der Erkennungseinrichtung erfassten Bewegung, zu bestimmen, ob die erfasste Vorspannung der Federmittel (30') größer oder niedriger oder im Wesentlichen gleich eines vorgegebenen Vorspannungswertes ist.

10. Werkzeugmaschine (1, 1') nach einem der vorhergehenden Ansprüche, **dadurch gekennzeichnet, dass** die Ketteneinrichtungen (6, 7; 6', 7') unterhalb der Gegenhaltemittel (35, 36; 35', 36') angeordnet sind.

## Revendications

1. Machine-outil (1, 1') pour usiner des panneaux ou pièces similaires, comprenant :
- un système de déplacement (3) pour déplacer un panneau (P) le long d'une direction d'avance prédéfinie (A, A'), ledit système de déplacement (3) comprenant :
• des moyens à chaîne (6, 7 ; 6', 7') comprenant une pluralité de maillons (10, 10'), où au moins un maillon de ladite pluralité de maillons (10, 10') comprend un élément de support (13) ;
• des moyens correspondants (35, 36 ; 35', 36') qui sont placés en face desdits moyens à chaîne (6, 7 ; 6', 7') ;
- des moyens opérationnels pour usiner ledit panneau (P) lorsque ledit panneau (P) avance selon ladite direction d'avance prédéfinie (A, A') ;
**caractérisée en ce que** les moyens à chaîne (6, 7 ; 6', 7') comprennent un élément mobile (21, 21') qui est accouplé de façon mobile avec ledit élément de support (13) et des moyens élastiques (30, 30') qui sont prévus entre ledit élément de support (13) et ledit élément mobile (21, 21') ; lesdits moyens élastiques (30, 30') sont configurés pour pousser ledit panneau (P) contre lesdits moyens correspondants (35, 36 ; 35', 36') lorsque ledit panneau (P) est placé, en utilisation, entre lesdits moyens à chaîne (6, 7 ; 6', 7') et lesdits moyens correspondants (35, 36 ; 35', 36') ; et ledit au moins un maillon comprend aussi des moyens de réglage (32, 32') pour régler la précharge desdits moyens élastiques (30, 30') et permettre une variation de la poussée exercée par lesdits moyens élastiques (30, 30') sur ledit panneau (P) vers lesdits moyens correspondants (35, 36 ; 35', 36').

2. Machine-outil (1, 1') selon la revendication 1, **caractérisée en ce que** lesdits moyens de réglage comprennent un organe fileté (32, 32') agissant sur lesdits moyens élastiques (30, 30').

3. Machine-outil (1, 1') selon la revendication 2, **caractérisée en ce que** ledit organe fileté (32, 32') est accouplé avec ledit élément mobile (21, 21').

4. Machine-outil (1, 1') selon l'une quelconque des revendications précédentes, **caractérisée en ce que** lesdits moyens de réglage (32, 32') sont manœuvrables manuellement.

5. Machine-outil (1, 1') selon l'une quelconque des revendications précédentes, **caractérisée en ce que** ledit élément de support (13) ou ledit élément mobile (21, 21') comprend des moyens de butée (20, 28) pour limiter un déplacement relatif entre ledit élément de support (13) ou ledit élément mobile (21, 21'), qui est provoqué par lesdits moyens élastiques (30, 30').

6. Machine-outil (1') selon l'une quelconque des revendications précédentes, **caractérisée en ce qu'**elle comprend au moins un dispositif de mesure (39') pour mesurer la précharge desdits moyens élastiques (30').

7. Machine-outil (1') selon la revendication 6, **caractérisée en ce que** ledit au moins un dispositif de mesure (39') comprend des moyens d'actionnement (40') qui sont configurés pour exercer, en utilisation, une force de compression d'une intensité prédéfinie sur lesdits moyens élastiques (30').

8. Machine-outil (1') selon la revendication 7, **caractérisée en ce que** ledit au moins un dispositif de mesure (39') comprend un dispositif de détection pour détecter, en utilisation, au moins un déplacement desdits moyens d'actionnement (40') lorsque lesdits moyens d'actionnement (40') exercent ladite force de compression sur lesdits moyens élastiques (30').

9. Machine-outil (1') selon les revendications 7 et 8, **caractérisée en ce que** ledit au moins un dispositif de mesure (39') comprend une unité de contrôle qui est opérationnellement reliée auxdits moyens d'actionnement (40') et audit dispositif de détection et configurée de manière à déterminer, en utilisation, si la précharge détectée desdits moyens élastiques (30') est supérieure ou inférieure à ou essentiellement égale à une valeur de précharge prédéfinie basée sur le déplacement détecté par ledit dispositif de détection.

10. Machine-outil (1, 1') selon l'une quelconque des revendications précédentes, **caractérisée en ce que** lesdits moyens à chaîne (6, 7 ; 6', 7') sont placés sous lesdits moyens correspondants (35, 36 ; 35', 36').
